# EUROPÄISCHE PATENTSCHRIFT

(11) **EP 1 657 468 B1**
(45) Veröffentlichungstag und Bekanntmachung des Hinweises auf die Patenterteilung: **23.05.2012**
(21) Anmeldenummer: 05023919.3
(22) Anmeldetag: 03.11.2005
(51) Int. Cl.: F16F 9/32, F16F 9/54

(54) **Schwingungsdämpfer**
Vibration damper
Amortisseur de vibrations

(30) Priorität: 10.11.2004 DE 102004054206
(43) Veröffentlichungstag der Anmeldung: 17.05.2006
(73) Patentinhaber: ZF Friedrichshafen AG, 88046 Friedrichshafen (DE)
(72) Erfinder: Miller, Alexander, 96123 Litzendorf (DE); Thomä, Achim, Dr., 97493 Bergrheinfeld (DE); Stretz, Klaus, 97437 Haßfurt (DE); Gilsdorf, Heinz-Joachim, 97499 Donnersdorf (DE)

(56) Entgegenhaltungen:
- DE-A1- 10 308 193
- DE-A1- 19 908 607
- US-A- 4 804 169

## Beschreibung

Die Erfindung betrifft einen Schwingungsdämpfer gemäß dem Oberbegriff von Patentanspruch 1.

Aus der US 4 655 438 ist ein Schwingungsdämpfer in Kombination mit einer Luftfeder bekannt, die zwischen einem Fahrzeugaufbau als gefedertem Fahrzeugteil und einer Achse als zu tragendem Fahrzeugelement angeordnet ist. Der Schwingungsdämpfer umfasst eine in einem Zylinder axial bewegliche Kolbenstange, die über ein Anschlusslager in Wirkverbindung mit dem Fahrzeugaufbau steht. Die Luftfeder verfügt an ihrem oberen Ende über ein Stützlager, das ringförmig das Anschlusslager umschließt und mit dem Anschlusslager zwar eine gemeinsame Baugruppe bildet, jedoch aufgrund der getrennten Federelemente und Anschlusskörper zu den Federelementen verschiedene Federraten für die Kolbenstange und die Luftfeder aufweist. Die Kolbenstange wird von einem Rohr eingehüllt, das in Wirkverbindung mit dem Stützlager der Luftfeder steht. Bei einer Federungsbewegung führt der Zylinder zusammen mit der Kolbenstange eine räumliche Schwenkbewegung aus, die aufgrund der Elastizität des Rollbalgs eine Relativbewegung zu dem besagten Rohr darstellt. Aufgrund der engen radialen Bauräume kann nicht ausgeschlossen werden, dass das Rohr mit dem Schwingungsdämpfer in Reibkontakt tritt. Dieses Problem tritt jedoch nicht nur bei Luftfedern dieser speziellen Bauweise auf, sondern muss auch im Zusammenhang mit konventionellen Schwingungsdämpfern, insbesondere Federbeinen berücksichtigt werden. Die DE 101 26 680 C1 zeigt einen ähnlichen Lageraufbau, jedoch mit einer Elastomerfeder am Stützlager. Anstelle des Elastomerlagers kann jedoch auch z. B. ein starres Schutzrohr verwendet werden, das in Kontakt mit dem Schwingungsdämpfer oder der Fahrzeugtragfeder kommen kann, wenn z. B. eine Federungsbewegung mit einer Lenkbewegung überlagert auftritt. Das weichere innere Anschlusslager bewirkt eine Schrägstellung des gesamten Schwingungsdämpfers. Bei einer derartigen Bewegung verbiegt sich die Fahrzeugtragfeder bezogen auf ihre Längsachse. Das obere Ende der Fahrzeugtragfeder verbleibt an dem nur geringfügig verformten Stützlager, hingegen bewegt sich das untere Ende der Fahrzeugtragfeder synchron mit dem Schwingungsdämpfer, so dass die Fahrzeugtragfeder bezogen auf ihre Längsachse einen gebogenen Verlauf einnimmt und dabei u. U. mit dem Schutzrohr in Kontakt kommt. Dieser Kontakt ist mit einer Geräuschbildung verbunden, die eine Komfortminderung darstellt.

Die DE 199 08 607 A1 beschreibt ein Luftfederbein, umfassend einen Schwingungsdämpfer und eine Luftfeder. Der Schwingungsdämpfer kann sich über ein an der Kolbenstange befestigtes Lager kardanisch bewegen. Am Fahrzeugaufbau ist starr ein Rohrkörper befestigt, der ab einer definierten Winkelbewegung des Schwingungsdämpfers mit einem den Rohrkörper mit radialem Abstand umfassend Anschlag eines Luftfederkolbens in Kontakt kommt.

Aufgabe der vorliegenden Erfindung ist es, einen Schwingungsdämpfer zu realisieren, der ein Anschlusslager für den Schwingungsdämpfer und ein Stützlager für eine Fahrzeugtragfeder aufweist, wobei das zum Stand der Technik beschriebene Problem der Geräuschbildung behoben wird.

Erfindungsgemäß wird die Aufgabe dadurch gelöst, dass der rohrförmige Körper über das Stützlager schwenkbar gelagert ist und zwischen der Kolbenstange und dem rohrförmigen Körper ein Übertragungslager angeordnet ist, das ab einem definierten Schwenkwinkel des Anschlusslagers eine darüber hinausgehende Schwenkbewegung des Schwingungsdämpfers über den rohrförmigen Körper auf das Stützlager überträgt, so dass die weitere Schwenkbewegung des Anschlusslayers synchrom mit dem Stütglager und allen damit verbundenen Bauteilen verläuft.

Die Lagerung für die Kolbenstange kann sowohl axial und in Grenzen auch radial weicher ausgeführt sein als das Stützlager für die Fahrzeugfeder. Ab dem definierten Schwenkwinkel sorgt das Übertragungslager für eine im wesentlichen synchrone Bewegung der Kolbenstange, des Rohrkörpers und des Stützlagers, so dass kein schädigender Kontakt z. B. zwischen dem Rohrkörper und der Fahrzeugfeder auftreten kann.

Um Anschlaggeräusche zu vermeiden, ist das Übertragungslager radial elastisch ausgeführt.

In weiterer vorteilhafter Ausgestaltung weist der rohrförmige Körper eine Aufnahme für das elastische Übertragungslager auf. Die Aufnahme verfügt über eine nutförmige Ausgestaltung, wobei das Übertragungslager von mindestens einem Elastomerring gebildet wird.

Um insgesamt eine schlanke Bauweise zu erreichen wird die Aufnahme von einer Glocke gebildet, die an dem rohrförmigen Körper befestigt ist. Zusätzlich kann die Glocke einen Druckanschlag für den Schwingungsdämpfer tragen.

Im Hinblick auf einen ausreichend großen Hebelarm für die Kraftübertragung der Schwenkbewegung des Schwingungsdämpfers auf das Stützlager ist das Übertragungslager in einem axialen Abstand vom Stützlager in Richtung des Zylinders angeordnet.

Das Übertragungslager wird bevorzugt von mindestens zwei Elastomerkörpern gebildet, von denen mindestens einer oberhalb und mindestens einer unterhalb einer Lagerscheibe angeordnet ist, die mit der Kolbenstange axial fest verbunden ist. Die Elastomerkörper oberhalb und unterhalb der Lagerscheibe können auch zu einer Baueinheit zusammengefasst sein.

Des weiteren kann man vorsehen, dass das Anschlusslager der Kolbenstange als ein Radiallager ausgeführt ist. Insbesondere in der Kombination mit einem Übertragungslager, das auch axiale Kräfte aufnehmen kann, bietet sich diese Lösung an.

Die Kolbenstange innerhalb des Zylinders kann einen größeren Durchmesser aufweisen als auf einem Längenabschnitt zwischen dem Übertragungslager und dem Anschlusslager. Dadurch wird eine größere Elastizität innerhalb der Kolbenstangen erreicht. Andererseits können größere Kolbenstangendurchmesser eingesetzt werden, um z. B. eine bestimmte Dämpfkraftcharakteristik zu erreichen, ohne dass dadurch der Bauraum zwischen dem rohrförmigen Körper und der Kolbenstange weiter eingeschränkt wird.

Gemäß einem vorteilhaften Unteranspruch weist die Kolbenstange einen Absatz auf, an dem sich die Lagerscheibe des Übertragungslagers axial abstützt.

Eine besonders einfache Lösung zeichnet sich dadurch aus, dass das Übertragungslager und das Anschlusslager der Kolbenstange zusammengefasst sind. Der rohrförmige Körper stellt praktisch einen Teil der Kolbenstange dar und steht für verschiedenste Anwendungen z. B. zur Kabelführung zu einem verstellbaren Dämpfventil innerhalb des Schwingungsdämpfers zur Verfügung.

Anhand der folgenden Figurenbeschreibung soll die Erfindung näher erläutert werden.

Es zeigt:
- Fig. 1: Erfindungsgemäßer Schwingungsdämpfer im Längsschnitt
- Fig. 2 u. 3: Alternative Ausführung mit einem Anschlusslager als einfaches Radiallager
- Fig. 4: Übertragungslager als kombiniertes Axial-Radiallager

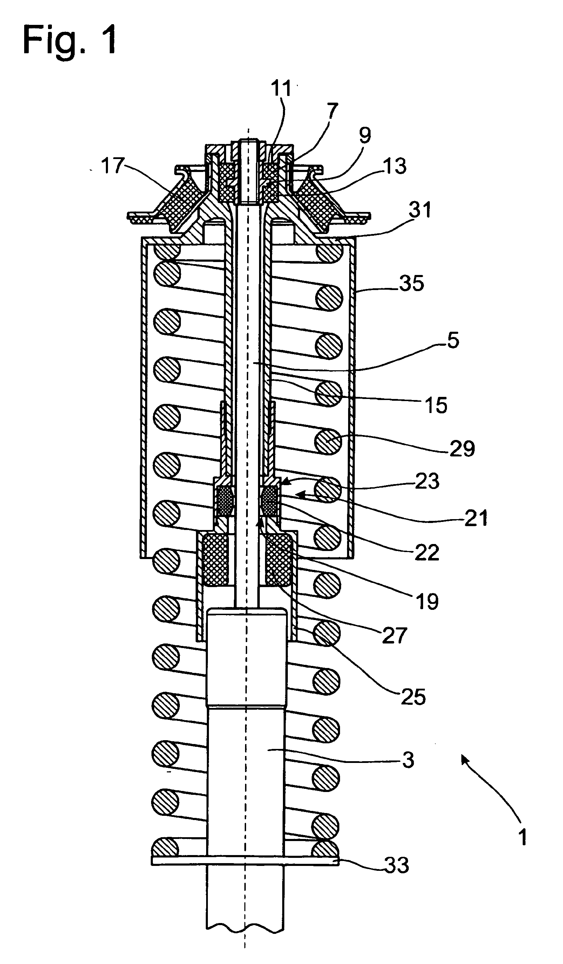

Die Fig. 1 zeigt einen Schwingungsdämpfer 1 in der Bauform eines Federbeins. Innerhalb eines Zylinders 3 ist eine Kolbenstange 5 längsverschiebbar gelagert. Ein außenseitiges Ende der Kolbenstange verfügt über ein Anschlusslager 7, das eine ringförmige Lagerscheibe 9 aufweist, die auf ihrer Ober- und Unterseite jeweils mit einem Elastomerkörper 11; 13 bestückt ist. Damit übernimmt das Anschlusslager 7 Axial- und Radialkräfte. Ein Längenabschnitt der Kolbenstange 5 wird von einem rohrförmigen Körper 15 eingehüllt, der einen radialen Abstand zur Kolbenstange einnimmt. An seinem oberen Ende ist der rohrförmige Körper mit einem Stützlager 17 verbunden, das wiederum mit einem nicht dargestellten Fahrzeugteil, z. B. einem Fahrzeugaufbau oder einer Fahrzeugkabine in Wirkverbindung steht. Das ebenfalls nicht dargestellte untere Ende des Schwingungsdämpfers ist an einem Tragelement, wie z. B. einer Fahrzeugachse oder einem Fahrzeugrahmen angelenkt. Das Stützlager verfügt über eine größere Federrate als das Anschlusslager.

Der rohrförmige Körper 15 verfügt an seinem in Richtung des Zylinders 3 weisenden Ende über eine rohrförmige Aufnahme 19, in der ein radial elastisches Übertragungslager 21 gekammert ist. Die Aufnahme 19 wird von einer Glocke 23 gebildet, die an dem rohrförmigen Körper mittels eines Gewindes befestigt ist. Die Glocke trägt wiederum eine Stufenhülse 25, in der ein Druckanschlag 27 befestigt ist, der einen radialen Abstand zur Kolbenstange 5 aufweist.

Das radial elastische Lager 21 wird von mindestens einem Elastomerring 22 gebildet, der an der Innenwandung der Glocke 23 vorgespannt ist. Durch die endseitige Anordnung des radial elastischen Übertragungslagers 21 am rohrförmigen Körper ergibt sich ein axialer Abstand zum Stützlager 17, wobei das Übertragungslager nur Radialkräfte übertragen kann.

Konzentrisch zur Kolbenstange 5 und zum Zylinder 3 ist eine Tragfeder 29 zwischen einem oberen und einem unteren Federteller 31; 33 verspannt. Der obere Federteller 31 ist starr mit dem rohrförmigen Körper 15 verbunden und wirkt damit ebenfalls auf das Stützlager 17. Die Tragfeder 29 wird von einem Schutzrohr 35 eingehüllt, das in Wirkverbindung mit dem rohrförmigen Körper 15 und dem oberen Federteller 31 steht.

Bei einer Federungsbewegung des Zylinders 3 zusammen mit der Kolbenstange 5 tritt in Abhängigkeit der konstruktiven Ausgestaltung der Hebelanlenkung, z. B. der Fahrzeugachse, eine räumliche Schwenkbewegung im Anschlusslager 13 auf, das wie bereits beschrieben, eine deutlich kleinere Federrate aufweist als das Stützlager 17. Das Stützlager verbleibt bis zu einem bestimmten Schwenkwinkel in seiner Konstruktionslage. Dabei nimmt die Tragfeder 29 einen bogenförmigen Verlauf ein und der Abstand des Elastomerrings 25 im Übertragungslager zur Kolbenstange 5 verringert sich einseitig.

Ist ein definierter Schwenkwinkel des Anschlusslagers 7 in Verbindung mit einer Relativbewegung zwischen dem rohrförmigen Körper 15 und der Kolbenstange 5 erreicht, dann überträgt das radial elastische Übertragungslager eine darüber hinausgehende Schwenkbewegung der Kolbenstange über den rohrförmigen Körper 15 auf das Stützlager 17, so dass die weitere Schwenkbewegung des Anschtusslagers synchron mit dem Stützlager und allen damit verbundenen Bauteilen verläuft, so dass kein Kontakt z. B. zwischen der Tragfeder und dem Schutzrohr 35 auftreten kann.

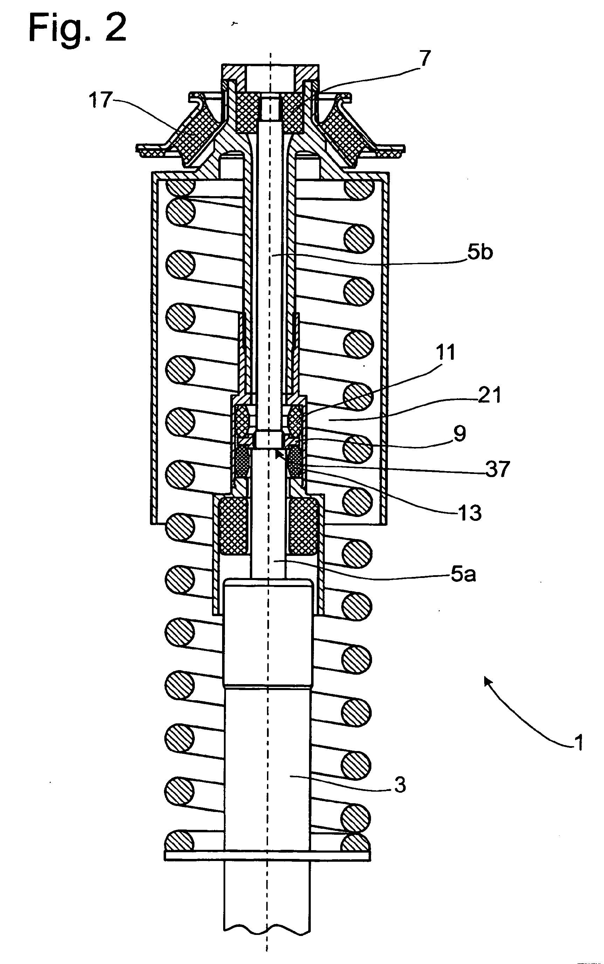

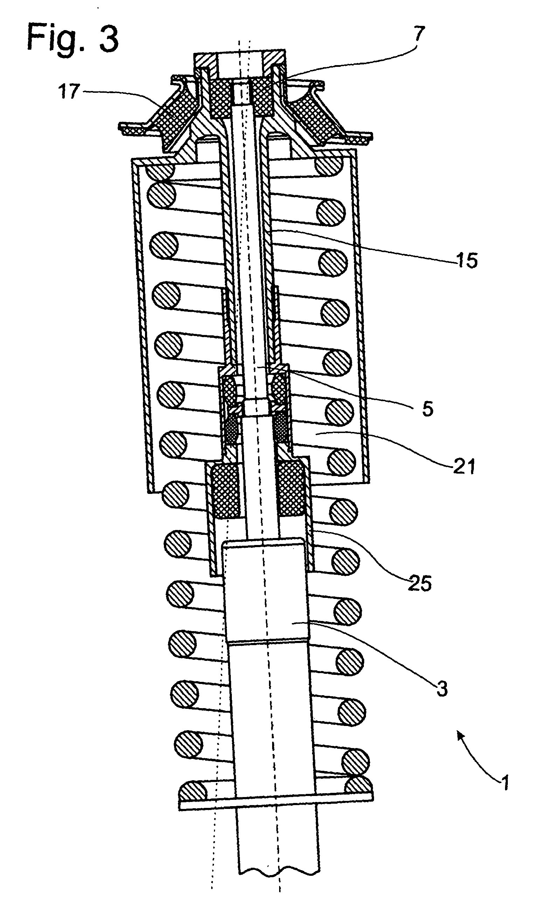

Die Figuren 2 und 3 zeigen eine Abwandlung des Schwingungsdämpfers 1 nach Fig. 1. Der wesentliche Unterschied besteht darin, dass das Anschlusslager 7 als ein einfaches Radiallager ausgeführt ist und das Übertragungslager 21 Axial- und Radialkräfte aufnehmen kann. An der Kolbenstange ist eine Lagerscheibe 9 fixiert, an deren Ober- und Unterseite die mindestens einen Elastomerkörper 11; 13 axial verspannt ist. Die Lagerscheibe 9 stützt sich auf einem Absatz 37 der Kolbenstange 5 ab. Der Längenabschnitt 5a der Kolbenstange, der in den Zylinder 3 ein- und ausfahren kann, verfügt über einen größeren Durchmesser als ein Längenabschnitt 5b oberhalb des Übertragungslagers 21, wobei der Durchmesserunterschied zwischen den beiden Kolbenstangenabschnitten 5a; 5b den Absatz 37 erzeugt. Im Vergleich zur Variante nach Fig. 1 ergibt sich durch den reduzierten Kolbenstangendurchmesser im Längenabschnitt 5b eine Gewichtseinsparung. Die Federrate des Übertragungslagers 21 bezogen auf die Axialkräfte gleicht dem Anschlusslager nach Fig. 1.

Mit der Fig. 3 soll der besagte Schiefstand der Kolbenstange 5 zum rohrförmigen Körper 15 bei Erreichen des definierten Schwenkwinkels verdeutlicht werden. Man erkennt, dass die Stützhülse 25 dem Zylinder sehr nahe kommt. Ohne ein Übertragungslager 21 läge bei einer weiteren Schwenkbewegung ein Kontakt zum Zylinder vor.

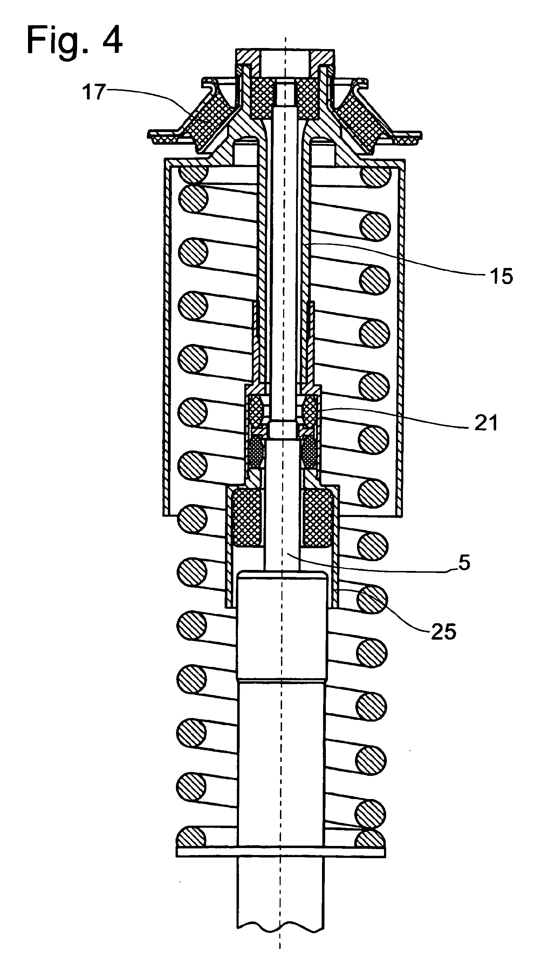

Die Fig. 4 zeigt eine Ausführung, bei der das Übertragungslager 21 und das Anschlusslager 7 funktional und räumlich zusammengefasst sind. Das Übertragungslager 21 übernimmt die gesamten Axial und Radialkräfte, die auf die Kolbenstange 5 wirken. Der in den Fig. 2 und 3 noch verwendete Längenabschnitt 5b der Kolbenstange wurde entfernt, so dass der rohrförmige Körper 15 mit der daran befestigten Glocke 27 und der Stufenhülse 27 nur noch eine kleine Teillänge der Kolbenstange 5 einhüllt. Der rohrförmige Körper übernimmt damit die Funktion der Kolbenstange.

## Patentansprüche

1. Schwingungsdämpfer (1), umfassend eine Kolbenstange (5; 5a; 5b), die in einem Zylinder (3) axial beweglich angeordnet ist, wobei die Kolbenstange (3) über ein Anschlusslager (7) zwischen einem gefederten Fahrzeugteil und einem Tragelement angeordnet ist, eine Tragfeder (29), die das gefederter Fahrzeugteil trägt und über ein Stützlager (17) ebenfalls mit dem gefederten Fahrzeugteil verbunden ist, wobei die Kolbenstange (5; 5a; 5b) zumindest auf einer Teillänge von einem rohrförmigen Körper (15) eingehüllt wird, der mit dem Stützlager (17) in Wirkverbindung steht,
**dadurch gekennzeichnet,**
**dass** der rohrförmige Körper (15) über das Stützlager (17) schwenkbar gelagert ist und zwischen der Kolbenstange (5; 5a; 5b) und dem rohrförmigen Körper (15) ein Übertragungslager (21) angeordnet ist, das ab einem definierten Schwenkwinkel des Anschlusslagers (7) eine darüber hinausgehende Schwenkbewegung des Schwingungsdämpfers (1) über den rohrförmigen Körper (15) auf das Stützlager (17) überträgt, so dass die weitere Schwenkbewegung des Anschlusslagers (7) synchron mit dem Stützlager (17) und allen damit verbundenen Bauteilen (15; 5; 5a; 5b; 21; 23;) verläuft.

2. Schwingungsdämpfer nach Anspruch 1,
**dadurch gekennzeichnet,**
**dass** das Übertragungslager (21) radial elastisch ausgeführt ist.

3. Schwingungsdämpfer nach Anspruch 1,
**dadurch gekennzeichnet,**
**dass** der rohrförmige Körper (15) eine Aufnahme (19) für das elastische Übertragungslager (21) aufweist.

4. Schwingungsdämpfer nach Anspruch 2,
**dadurch gekennzeichnet,**
**dass** das Übertragungslager (21) von mindestens einem Elastomerring (11; 13; 22) gebildet wird.

5. Schwingungsdämpfer nach Anspruch 3,
**dadurch gekennzeichnet,**
**dass** die Aufnahme (19) von einer Glocke (23) gebildet wird, die an dem rohrförmigen Körper (15) befestigt ist.

6. Schwingungsdämpfer nach Anspruch 5,
**dadurch gekennzeichnet,**
**dass** die Glocke (23) einen Druckanschlag (27) für den Schwingungsdämpfer (1) trägt.

7. Schwingungsdämpfer nach Anspruch 1,
**dadurch gekennzeichnet,**
**dass** das Übertragungslager (21) in einem axialen Abstand vom Stützlager (13) in Richtung des Zylinders (3) angeordnet ist.

8. Schwingungsdämpfer nach Anspruch 1,
**dadurch gekennzeichnet,**
**dass** das Übertragungslager (21) von mindestens zwei Elastomerkörpern (11, 13) gebildet wird, von denen mindestens einer oberhalb und mindestens einer unterhalb einer Lagerscheibe (9) angeordnet ist, die mit der Kolbenstange (5) axial fest verbunden ist.

9. Schwingungsdämpfer nach Anspruch 1,
**dadurch gekennzeichnet,**
**dass** das Anschlusslager (7) der Kolbenstange (5) als ein Radiallager ausgeführt ist.

10. Schwingungsdämpfer nach Anspruch 1,
**dadurch gekennzeichnet,**
**dass** die Kolbenstange (5a) innerhalb des Zylinders (3) einen größeren Durchmesser aufweist als auf einem Längenabschnitt (5b) zwischen dem Übertragungslager (21) und dem Anschlusslager (7).

11. Schwingungsdämpfer nach Anspruch 10,
**dadurch gekennzeichnet,**
**dass** die Kolbenstange (5) einen Absatz (37) aufweist, an dem sich die Lagerscheibe (9) des Übertragungslagers (21) axial abstützt.

12. Schwingungsdämpfer nach Anspruch 1,
**dadurch gekennzeichnet,**
**dass** das Übertragungslager (21) und das Anschlusslager (7) der Kolbenstange (5) zusammengefasst sind.

## Claims

1. Vibration damper (1), comprising a piston rod (5; 5a; 5b) which is arranged axially movably in a cylinder (3), the piston rod (3) being arranged via a connecting bearing (7) between a sprung vehicle part and a carrying element, and a carrying spring (29) which carries the sprung vehicle part and which is likewise connected via a supporting bearing (17) to the sprung vehicle part, the piston rod (5; 5a; 5b) being encased at least over a part-length by a tubular body (15) which is operatively connected to the supporting bearing (17),
**characterized in that** the tubular body (15) is mounted pivotably via the supporting bearing (17), and there is arranged between the piston rod (5; 5a; 5b) and the tubular body (15) a transmission bearing (21) which, beyond a defined pivot angle of the connecting bearing (7), transmits a pivoting movement, exceeding the said defined pivot angle, of the vibration damper (1) to the supporting bearing (17) by the tubular body (15), so that the further pivoting movement of the connecting bearing (7) takes place synchronously with the supporting bearing (17) and with all the components (15; 5; 5a; 5b; 21; 23) connected to it.

2. Vibration damper according to Claim 1, **characterized in that** the transmission bearing (21) is of radially elastic design.

3. Vibration damper according to Claim 1, **characterized in that** the tubular body (15) has a receptacle (19) for the elastic transmission bearing (21).

4. Vibration damper according to Claim 2, **characterized in that** the transmission bearing (21) is formed by at least one elastomeric ring (11; 13; 22).

5. Vibration damper according to Claim 3, **characterized in that** the receptacle (19) is formed by a bell (23) which is fastened to the tubular body (15).

6. Vibration damper according to Claim 5, **characterized in that** the bell (23) carries a pressure stop (27) for the vibration damper (1).

7. Vibration damper according to Claim 1, **characterized in that** the transmission bearing (21) is arranged at an axial distance from the supporting bearing (13) in the direction of the cylinder (3).

8. Vibration damper according to Claim 1, **characterized in that** the transmission bearing (21) is formed by at least two elastomeric bodies (11, 13), of which at least one is arranged above and at least one below a bearing disc (9) which is connected axially fixedly to the piston rod (5).

9. Vibration damper according to Claim 1, **characterized in that** the connecting bearing (7) of the piston rod (5) is designed as a radial bearing.

10. Vibration damper according to Claim 1, **characterized in that** the piston rod (5a) has a larger diameter within the cylinder (3) than on a length portion (5b) between the transmission bearing (21) and the connecting bearing (7).

11. Vibration damper according to Claim 10, **characterized in that** the piston rod (5) has a shoulder (37), on which the bearing disc (9) of the transmission bearing (21) is supported axially.

12. Vibration damper according to Claim 1, **characterized in that** the transmission bearing (21) and the connecting bearing (7) of the piston rod (5) are combined.

## Revendications

1. Amortisseur de vibrations (1), comprenant une tige de piston (5 ; 5a ; 5b) qui est disposée de manière mobile axialement dans un cylindre (3), la tige de piston (3) étant disposée par le biais d'un palier de raccordement (7) entre un partie de véhicule sur suspension et un élément porteur, un ressort de support (29) qui est porte la partie de véhicule sur suspension et qui raccordé par le biais d'un palier de support (17) également à la partie de véhicule sur suspension, la tige de piston (5 ; 5a ; 5b) étant enveloppée au moins sur une longueur partielle par un corps tubulaire (15) qui est en liaison fonctionnelle avec le palier de support (17),
**caractérisé en ce que**
le corps tubulaire (15) est supporté de manière pivotante par le biais du palier de support (17) et un palier de transfert (21) est disposé entre la tige de piston (5 ; 5a ; 5b) et le corps tubulaire (15), lequel palier de transfert, à partir d'un angle de pivotement défini du palier de raccordement (7), transmet un mouvement de pivotement au-delà de cet angle, de l'amortisseur de pivotement (1) par le biais du corps tubulaire (15) au palier de support (17), de sorte que le mouvement de pivotement supplémentaire du palier de raccordement (7) se déroule de manière synchrone avec le palier de support (17) et avec tous les composants (15 ; 5 ; 5a ; 5b ; 21 ; 23) qui lui sont raccordés.

2. Amortisseur de vibrations selon la revendication 1,
**caractérisé en ce que**
le palier de transfert (21) est réalisé sous forme radialement élastique.

3. Amortisseur de vibrations selon la revendication 1,
**caractérisé en ce que**
le corps tubulaire (15) présente un logement (19) pour le palier de transfert élastique (21).

4. Amortisseur de vibrations selon la revendication 2,
**caractérisé en ce que**
le palier de transfert (21) est formé par au moins une bague élastomère (11 ; 13 ; 22).

5. Amortisseur de vibrations selon la revendication 3,
**caractérisé en ce que**
le logement (19) est formé par une cloche (23) qui est fixée au corps tubulaire (15).

6. Amortisseur de vibrations selon la revendication 5,
**caractérisé en ce que**
la cloche (23) porte une butée de pression (27) pour l'amortisseur de vibrations (1).

7. Amortisseur de vibrations selon la revendication 1,
**caractérisé en ce que**
le palier de transfert (21) est disposé à une distance axiale du palier de support (13) dans la direction du cylindre (3).

8. Amortisseur de vibrations selon la revendication 1,
**caractérisé en ce que**
le palier de transfert (21) est formé par au moins deux corps élastomères (11, 13), dont au moins un est disposé au-dessus, et au moins un est disposé en dessous, d'une rondelle de palier (9), qui est connecté axialement fixement à la tige de piston (5).

9. Amortisseur de vibrations selon la revendication 1,
**caractérisé en ce que**
le palier de raccordement (7) de la tige de piston (5) est réalisé sous forme de palier radial.

10. Amortisseur de vibrations selon la revendication 1,
**caractérisé en ce que**
la tige de piston (5a) présente, à l'intérieur du cylindre (3), un plus grand diamètre que sur une portion longitudinale (5b) entre le palier de transfert (21) et le palier de raccordement (7).

11. Amortisseur de vibrations selon la revendication 10,
**caractérisé en ce que**
la tige de piston (5) présente un épaulement (37) sur lequel s'appuie axialement la rondelle de palier (9) du palier de transfert (21).

12. Amortisseur de vibrations selon la revendication 1,
**caractérisé en ce que**
le palier de transfert (21) et le palier de raccordement (7) de la tige de piston (5) sont réunis l'un à l'autre.
